# EUROPEAN PATENT SPECIFICATION

(11) **EP 2 539 287 B1**
(45) Date of publication and mention of the grant of the patent: **21.08.2019**
(21) Application number: 10846316.7
(22) Date of filing: 25.02.2010
(51) Int. Cl.: C02F 11/00, C02F 1/52, C02F 11/12

(54) **BALLAST FLOCCULATION AND SEDIMENTATION WATER TREATMENT SYSTEM WITH SIMPLIFIED SLUDGE RECIRCULATION, AND PROCESS THEREFOR**
ANLAGE FÜR BALLASTAUSFLOCKUNG UND SEDIMENTATIONSWASSERAUFBEREITUNG MIT VEREINFACHTER SCHLAMMREZIRKULATION UND VERFAHREN DAFÜR
SYSTÈME DE TRAITEMENT DES EAUX PAR FLOCULATION ET SÉDIMENTATION DE LEST AVEC RECYCLAGE SIMPLIFIÉ DES BOUES, ET PROCESSUS ASSOCIÉ

(43) Date of publication of application: 02.01.2013
(73) Proprietor: Veolia Water Solutions & Technologies Support, 94417 Saint-Maurice Cedex (FR)
(72) Inventor: QUEVILLON, Luc, Pierrefonds Québec H8Y 3M6 (CA)
(74) Representative: Vidon Brevets & Stratégie
(86) International application number: PCT/CA2010/000261
(87) International publication number: WO 2011/103651

(56) References cited:
- CA-A1- 2 643 008
- CA-A1- 2 658 909
- CA-A1- 2 672 520
- JP-A- 2009 247 957
- US-A1- 2004 144 730
- US-A1- 2005 103 719
- US-A1- 2005 218 056
- US-B1- 6 277 285

## Description

### FIELD OF THE INVENTION

This invention relates to a simplified sludge recirculation system to be added to a system for potable, or industrial water or waste water treatment, which may include a combination of methods from the group comprising coagulation, sedimentation, flocculation and ballast flocculation, in order to improve its efficiency by reducing ballast and water loss. It also relates to a specific fluid flow behaviour rendered possible specifically due to the addition of the simplified sludge recirculation system, and which furthermore improves the efficiency of the process.

### BACKGROUND OF THE INVENTION

Water treatment facilities are indispensable to the purification of potable, used and industrial water, wherein the water has been exposed to contaminants of various size and composition. The purification process is thus intended to remove those contaminants with the use of appropriately selected methods, which are generally relying on the containment of water in large tanks in order to apply the treatment. Some contaminants are dense enough to sink and accumulate at the bottom of those tanks, depending of the flow rate, while others are big enough to be successfully sieved from the water with a filter. However, some contaminants, called colloids, are microscopic particles evenly distributed inside a mixture that cannot be separated effectively from the hydrocolloid solution, which is the water and colloid mixture, by physical means and thus require specific treatment methods.

In order to separate the water from those unwanted pollutants, it must go through certain steps of purification. Pre-treatment can be made in order to retrieve large debris and adjust the pH of the water to facilitate ulterior steps of the treatment. To eliminate the smaller particles in suspension and thus clarify the water, water treatment facilities generally comprise a flocculation zone where a flocculating agent, either a polymer (like modified polyacrylamides), a chemical product (like sodium silicate) or in rare occasions a natural product with the same properties, is introduced within the water. With the addition of such a flocculating agent, floes (particle aggregates) of contaminants start to form out of the colloids. A mixer with rotative blades generally stirs the mixture located inside the flocculation zone in order to maximise the contact between the flocculating agent and the contaminants, thus enabling the creation of bigger floes.

This first step process, called flocculation, can be further improved with the addition of a ballasted material, like micro-sand, which acts as ballast and contact mass catalyzing the flocculation reaction inside the water and contaminants solution. When ballast is added, the aforementioned flocculating agent bonds it together with flocs of colloids and other particles, thus creating even bigger and heavier flocs by agglomerating previously created flocs along with sand particles. This in turn has the advantage of making the flocculation and the next step of the treatment happen faster.

The next step of the water treatment process is called sedimentation. It takes place in the sedimentation zone and capitalizes on the fact that gravity pulls every object toward the surface of the earth with a force proportional to its weight. Therefore, heavier particles are more easily dragged toward the bottom of this containment zone so the addition of granular ballast like sand, while not essential, can make a worthy addition to the process, reducing the time needed for the floes to settle down at the bottom of the zone. The flocculation process is thus essentially a means of reducing the amount of colloids in suspension inside the liquid solution, creating relatively heavy flocs out of colloids which do not effectively sink to the bottom of the sedimentation zone with the influence of gravity as would the bigger particles in suspension inside the liquid solution. Purified water is subsequently collected when it overflows from the sedimentation zone. If ballast is used in the flocculation zone, ballasted flocs then accumulate at the bottom of the sedimentation zone and comprise both sand and particulate contaminants, further requiring to be treated to separate the sand from the pollutants.

The mixture comprising contaminants, colloids, water and also sometimes sand form what is generally called "sludge", which is to be removed from the system after the extraction of as much of the sand and water as possible in order to maximize the efficiency of the process. The extracted sand can be used again and again in the process without the need to add much more throughout the course of action, depending on the effectiveness of the aforementioned extraction.

A non-essential additional step, called coagulation, can be added to the water treatment process in order to further improve its efficiency. If included in the process, it is generally the first step by which the polluted water begins its purification after pre-treatment. It consists in the addition of trivalent metallic salts to the water and contaminants solution. The salts (generally iron or aluminium composites) dissolve in water releasing ions with three positive charges which bind with colloids and then form small aggregates. Those aggregates are combined into flocs when a flocculating agent is added to the solution and because they are bigger particles than the colloids themselves, they make the agglomeration of aggregates into flocs relatively easier than the process without prior coagulation and thus augment the efficiency of the procedure at the cost of the inclusion of another zone to the facilities, the coagulation zone, and added expenses for the trivalent metallic salts.

The purified water is generally filtered after the sedimentation zone in order to remove unsettled flocs and particles which could still be in suspension inside the water. Water concentration of the sludge produced after sedimentation is still too high and thickening means are therefore needed to reduce it enough to facilitate transport, for example to landfill sites. This added process takes a lot of time to be efficient and often necessitates large amounts of space, as in the case of open air evaporation sites (or drying beds). An alternative is the method of pressing which requires the sludge to be pressed against textile filters to extract as much liquid as possible after what a compact residual cake is made out of the remaining solid contaminants. The method of centrifugation uses centrifugal force to extract water from the sludge, and as for pressing the residual contaminants are shaped in a compact cake. On the other hand, these methods require specialized machinery or vast open spaces to be efficient, which are costly and may be impractical depending of the economic and geographic situation of the community requiring them.

Another common problem of actual water treatment facilities is the extraction of sand ballast from the produced sludge which results in needless waste of material. US2004/0144730A discloses a water treatment system comprising a coagulation zone followed by a settlement zone. The sludge is extracted at the bottom of the settlement zone and delivered to a hydrocyclone.

### OBJECTS OF THE INVENTION

A first object of this invention is to reduce the volume of the sludge rejected by water treatment facilities which typically make use of a combination of water treatment methods comprising coagulation, flocculation, sedimentation and ballast flocculation, by providing an enhanced means of progressively purging water from said sludge through the use of an improved sludge recirculation system.

A second object of this invention is to present means to enhance water treatment processes which can be retro-fitted to existing facilities as well as newly constructed ones at minor costs.

A third object of this invention is to reduce the size of sludge water purging means in such facilities.

A fourth object of this invention is to eliminate the need for an exterior sludge water purging basin, used by some treatment facilities, thus reducing operating costs and duration of the water treatment process in such facilities.

A fifth object of this invention is to reduce the amount of ballast lost during water treatment processes which may include ballast flocculation.

### SUMMARY OF THE INVENTION

The present invention represents a solution for already existing and future water treatment facilities necessitating means of reducing the amount of water contained inside the residual sludge retrieved after water treatment in order to reduce the volume of waste to be disposed subsequently. It also reduces the cost and size of the apparatus needed to further concentrate the sludge. The present invention also reduces the loss of ballast in concerned facilities with certain types of liquid and solid separation means by augmenting its recuperation rate, accomplished by multiple repeated cycles of sludge reinsertion in those means which is rendered possible by the present invention.

A water treatment process comprising coagulation, ballast flocculation and sedimentation typically allows sludge solid matter concentration between 0,05% and 0,1 % (0,5 to 1,0 gram/litre). When combined to the simplified sludge recirculation system of this invention, extensive testing shows that the concentration proves to augment to above 30 g/L with rejected sludge volumes down by a percentage between 30 and 97 percents and necessitating smaller sludge thickening equipment.
The present invention also allows ballast recuperation with a rate equivalent to the one of water recuperation. The following table compares the performance results of the present invention with those of typical water treatment systems:

| **Rise Rate/Recirculation ratio** | **Matter in suspension (Raw water)** | **Typical Prior Art system performance** | **System performance according to the present invention** | **Performance gain** |
|---|---|---|---|---|
| 20 m/h and 3% recirculation | 20 mg/L | 96 m³/hour 0,6g/L | 3,2 m³/hour 20g/L | 97% |
| 40 m/h and 3% recirculation | 200mg/L | 96 m³/hour 9,82g/L | 47,1 m³/hour 20g/L | 51% |
| 40m/h and 6% recirculation | 600mg/L | 192 m³/hour 13,9g/L | 133,6 m³/hour 20g/L | 30% |
| 60 m/h and 6% recirculation | 200mg/L | 192 m³/hour 13,9g/L | 133,6 m³/hour 20g/L | 30% |
| 80 m/h and 3% recirculation | 200mg/L | 192 m³/hour 9,82g/L | 94 m³/hour 20g/L | 51% |

The combination of elements of embodiments one, two and three, as described latter on, makes possible the creation of a complex three-dimensional flow preventing the sludge from re-entering the topmost part of the sedimentation zone. This flow further improves the efficiency of the present invention and is a result of the particular designs described in the detailed description of the embodiments.

The invention consists of a sludge recirculation system according to claim 1, to be added to a sedimentation zone of a water treatment facility using at least one purification method selected from the group consisting of flocculation, sedimentation, coagulation and ballast flocculation, said sludge recirculation system for repeated cycling of said sludge in a progressively water purging fashion, said system comprising, inter alia:
- a downstream sludge recovering vessel, including a sludge recovering cavity located at a bottom portion of said vessel, said cavity defining a certain volume of said sedimentation zone for accumulating a diluted sludge under the influence of gravity;
- a recirculation apparatus, comprising:
   i. liquid and solid separation means that allows the purification of a liquid solution by removing solid contaminants located therein, for obtaining resulting sludge, of which higher density particles have been removed;
   ii. recirculation means, comprising:
      1. a recirculation line connected at an intake end thereof to said sludge recovering cavity and connected to said liquid and solid separation means at an outlet end thereof, for recirculating the resulting sludge;
      2. a reinsertion line operatively connected at an intake end thereof to said liquid and solid separation means and to said sludge recovering vessel at an outlet end thereof; and
      3. an elimination line connected at an intake end thereof to said reinsertion line for rejecting high density sludge outside of said water treatment facility at a downstream outlet end thereof;
   iii. means active during said repeated cycling of said sludge through the sludge recirculation system for progressively eliminating said sludge from said sludge recirculation system through said elimination line;
   iv. means to drive said sludge into said recirculation apparatus during said repeated cycling.

Said means to drive said sludge into said recirculation apparatus is a pump located downstream on said recirculation line. Also, said means for progressively eliminating said sludge from said sludge recirculation system includes means to monitor the solid constituents concentration of said sludge.

Said liquid and solid separation means is a hydro cyclone mounted downstream of said recirculation line relative to said pump, which comprises an overflow outlet and an underflow outlet, said overflow outlet connected to said recirculation means and said underflow outlet pouring inside a flocculation zone.

A control means being a flow control means is further provided to regulate the speed of said liquid solution flowing through said recirculation apparatus in such a fashion as to optimize the efficiency of said hydro cyclone.

Said means for progressively eliminating said sludge from said sludge recirculation system through said elimination line is a suspended solid analyser which works in conjunction with said flow control means to further optimize the efficiency of said hydro cyclone by adjusting the flow speed to said solid constituents concentration of said sludge.

The sedimentation zone comprises a rotating scraper, comprising a top part and a bottom part relative to the plane of said sedimentation zone and rotating in said plane, which guides said sludge deposited at said bottom of said sedimentation zone toward said sludge recovery cavity in such a fashion as to keep it grounded and effectively separates said sedimentation zone in a first upper section and a second lower section relative to the plane of the scraper, thus isolating said sludge recovery cavity, said recirculation line intake end and said reinsertion line outlet end located within said second lower part from said first upper part of said sedimentation zone.

Preferably, said rotating scraper is hollow-centered forming a hollow shaft and coincides with a downstream end portion of said reinsertion line of said recirculation apparatus pouring inside said sludge recovering cavity.

Preferably, an inverted cone is embossed on said bottom part of said scraper coaxially to said hollow shaft, substantially preventing said liquid solution located in said sludge recovering cavity from dynamically back flowing into said reinsertion line and maximising flow through said recirculation line.

Preferably, said recirculation apparatus extends externally to said sludge recovering vessel.

Preferably, said reinsertion line outlet of said recirculation apparatus opens inside of said sludge recovering cavity.

Preferably, a sand sedimentation chamber is further included in said recirculation apparatus and mounted upstream of said reinsertion line and of said elimination line and downstream of said hydro cyclone, enabling sand-like granular material recuperation within said recirculation apparatus where the sludge contains sand-like material.

Preferably, said recirculation apparatus comprises a hydro cyclone, a recirculation flow control valve mounted to said reinsertion line and a suspended solid analyser also mounted to said reinsertion line, controlling the opening and closing of said flow control valve depending on concentration of said sludge inside said recirculation apparatus.

Preferably, a suspended solid analyser is installed at an entry pipe feeding said water treatment facility with water, thus allowing the water flow through said recirculation apparatus to be controlled depending on the colloidal contaminants concentration inside the water.

Preferably, said hydro cyclone wherein said hydro cyclone rejects recirculated sludge in the sludge recirculation system.

The invention also consists of a method according to claim 11 of creating a particular fluid flow behaviour making use of said sludge *recirculation system,* preventing the sludge located in said second lower section of said sedimentation zone of coming back in said first upper section of the sedimentation zone as well as maximizing the flow from said reinsertion line to said recirculation line, comprising the following steps :
a) a mixture of water and contaminants floes enters a sedimentation zone;
b) the floes then drop to a downstream sludge recovering vessel, including a sludge recovering cavity, located at a bottom portion of said vessel, said cavity defining a certain volume of said sedimentation zone under the influence of gravity, forming sludge;
c) a rotating scraper, comprising a bottom end and a hollow center, guides said sludge deposited at said bottom of said vessel toward said sludge recovery cavity in such a fashion as to keep it grounded;
d) a recirculation line having an intake mouth thereof located inside said sludge recovering cavity and operatively connected to a pump, drives sludge into said recirculation apparatus;
e) a certain amount of sludge is reinserted within said sludge recovering cavity through a reinsertion line having an outlet end thereof located inside said hollow- center of said *scraper or on the wall of said sludge recovering cavity;*
f) the resulting stream of sludge flows back toward said recirculation line without back flowing inside the reinsertion line due to the specific combination of:
   i. said rotating scraper;
   ii. said sludge recovering cavity;
   iii. said recirculation apparatus;
   iv. said recirculation line; and
   v. said reinsertion line of said recirculation apparatus located inside said hollow center of said rotating *scraper or on the wall of said sludge recovering cavity* and pouring into said sludge recovering cavity.

Preferably, an inverted cone is added to said bottom end of said scraper, further enabling the flow of said sludge pouring from said reinsertion line through said recirculation line without backflowing inside said reinsertion line.

### BRIEF DESCRIPTION OF THE DRAWINGS

In the drawings illustrating the preferred embodiment of the invention:
**Fig. 1** is a schematic elevational view of a water treatment facility with the present invention relying on an exterior sludge recirculation system, further known as embodiment one;
**Fig.2** is a schematic elevational view of a water treatment facility where a sludge recirculation system reinserts the sludge at the bottom of the sedimentation zone with a conduit going down through the hollow center of the rotating scraper, further known as embodiment two, and where the sludge recirculation flow is regulated by a suspended solid analyzer;
**Fig.3** is another schematic elevational view of a water treatment facility comprising the second embodiment of the sludge recirculation system of **Fig 2** where the sludge recirculation flow is instead regulated by a flowmeter;
**Fig 4** is another schematic elevational view of a water treatment facility where the sludge recirculation flow is controlled by a timer;
**Fig 5** is another schematic elevational view of a water treatment facility showing the different emplacements wherein recirculation flow control or suspended solid analysis components may be located;
**Fig. 6** shows another schematic elevational view of a water treatment facility where the recirculation flow control is done by suspended solid analysis of the water flowing through the feeding pipe; and
**Fig. 7** shows a graphic representation at an enlarged scale relative to **Figs. 2 to 4****,** **5** **and** **6****,** of the simulation of the specific flow dynamic of the sludge going through the sludge recirculation system of the present invention, in this case the sludge recirculation system of embodiment two, and taken at the bottom right hand side portion of **Figs. 2-4****,** **5** **or** **6****.**

### DETAILED DESCRIPTION OF THE EMBODIMENTS

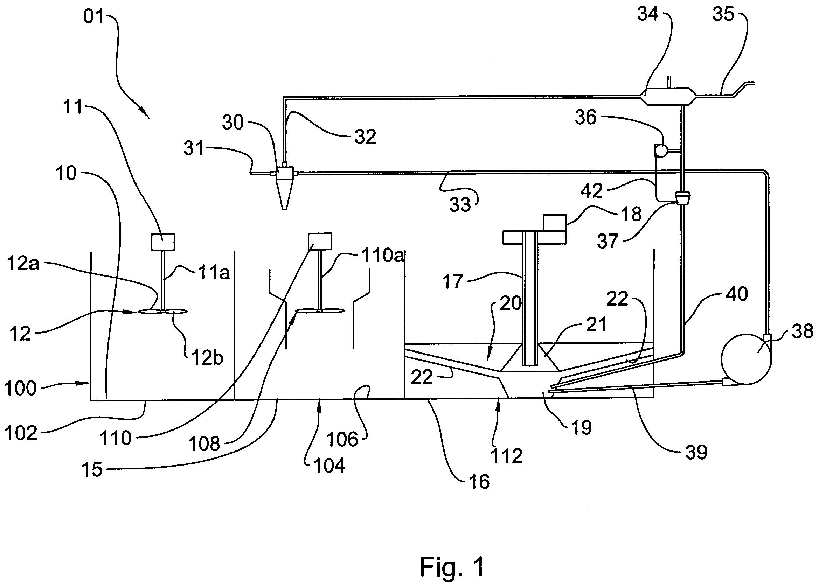

**Fig. 1** generally shows a water treatment facility **01** comprising 3 main zones inside which water is circulating with an added sludge recirculation system corresponding to embodiment one of the present invention. Water flows from left to right, in order to be progressively purified from its contaminants. The upstream coagulation zone **10** is defined as an upright containment vessel **100** for example of cubic shape receiving water through a conduit that may be a conventional pipe and which is not shown on the figure. A coagulant, preferably a trivalent metallic salt is added to the water flowing in coagulation zone **10** in order to initiate the formation of aggregates of contaminants amidst the water. The small pollutant particles in suspension within this water are generally negatively charged and thus are attracted by the trivalent metallic salts, which dissolve in the water leaving ions with three positive charges. A motor **11** fixed above the coagulation zone allows the rotation of the mixer **12,** to which it is connected by the rotary shaft **11a.** Mixer **12** includes a number of rotatable blades **12a, 12b,** ... extending generally horizontally in operative condition, spacedly over the flooring **102** of the first upstream containment vessel **100.**

The shaft **11a** is long enough for the mixer **12** to rest at a certain depth below water surface inside the coagulation zone **10** and rotates along with the mixer **12** because of the rotary motion transmitted by the motor **11.** The mixer blades **12a, 12b,** ... rotate in a plane generally parallel to the plane of vessel flooring **102** and stirs the water and trivalent metallic salts solution in order to maximize the contact surface between the two reactants and thus the ionic attraction between said ions with positive charges and the contaminants within the water. This step is not compulsory to the achievement of proper water purification but may improve the efficiency of the water treatment.

The water, now containing small aggregates of contaminants, is then poured inside a second upright containment vessel **104,** which is called the flocculation zone **15.** A motor **110** fixed above the flooring **106** of vessel **104** also allows a second mixer **108** to rotate at a certain depth below the water surface spacedly over the plane of the flooring **106** of vessel **104** by the inclusion of the rotary shaft **110a.** A flocculating agent is mixed to the water in vessel **104,** which is already containing aggregates formed in the coagulation zone.

This flocculating agent is mixed thoroughly inside the water by mixer **108** and allows the formation of flocs of particles inside the flocculation zone **15** when combining with contaminants. The formation rate and size (and thus the weight) of the flocs can preferably be further augmented by the addition of ballast. The most commonly used ballast is micro-sand (for example between 50µm and 150µm in diameter), due to its general availability and relatively cheap cost.

The water then enters a third zone called the sedimentation zone **16** located in another upright containment vessel **112.** The flocs and aggregates that were created inside the two preceding zones **10** and **15** are attracted by gravity toward the funnel-shaped flooring **22** of downstream vessel **112.** Heavier particles are therefore more likely to sink to the flooring **22** of the sedimentation zone **16** and do so more quickly than lighter ones, which is the interest of coagulation and ballast flocculation in order to improve the efficiency of the water treatment system. A scraper **20,** which may carry a device such as an inverted cone **21** at its center, is given a rotational movement along the plane of the sedimentation zone **16** through a motor **18** driving a rotatable upright shaft **17.**

The purpose of shaft **17** is to rake the flocs of contaminants which have deposited on the radially inwardly downwardly sloped walls of flooring **22** of a sludge recovering cavity **19** located beneath inverted cone **21** in the center of the sedimentation zone **16.** The flocs of contaminants thus gather inside the sludge recovering cavity **19,** the mass of which consequently forming sludge.

The inverted cone 21 may be replaced by other suitable structures, for example by a horizontal perforated plate, spacedly supported over pit flooring 22. The perforations of such a perforated plate would enable free passage of the sludge at such a flow rate that the sludge would not be returned to a state of suspension.

This sludge, which contains a relatively large volume of water, shall hereinafter be called diluted sludge. To optimize the operation of this water treatment, this diluted sludge needs to be treated in order to purge as much water as possible from the diluted sludge. To achieve this goal, the diluted sludge is sucked into the recirculation intake line **39** of the recirculation apparatus by the action of the pump **38.** The sludge then goes trough outlet line **33** and enters a hydro cyclone **30,** which conventionally serves as a liquid and solid separation means. The hydro cyclone **30** is made in such a way that sludge with a higher concentration of contaminants needs a slower flow rate through the hydro cyclone **30** to achieve high separation rates, and inversely sludge with a lower concentration of contaminants requires faster flow rates to achieve good separation rates, due to its centrifugal functioning.

The overflow material, containing the lower density particles, exits the hydro cyclone **30** through outlet pipe **32** and the underflow material, containing the higher density particles, goes through the bottom opening to be reused. The service water input 31 enables cleansing of recirculated ballasted material. A sand sedimentation air vent chamber **34** may be connected to pipe **32** as it allows better recuperation of the sand still found inside the overflow provided by the hydro cyclone **30.** Also, we have found after several testings that the sand sedimentation chamber is a good place to add an air vent. This air vent facilitates separation of air from recirculated sludge, and thus prevents air from being introduced at the sludge recirculation pit.

The resulting sludge is then either sent through the elimination outlet line **35** of the recirculation apparatus out of the water treatment facility, or the sludge goes back to the sludge recovering cavity **19** by reinsertion line **40.** A device **36** controlling the opening of flow control valve **37** selects lines **35** or **40,** if the concentration of solid contaminants inside the sludge reaches a predetermined level or if the flow rate reaches a specified value or after a certain amount of time. Device **36** may consist for example of a suspended solid analyser, a flow meter or a timer, respectively. The higher contaminants concentration sludge thereafter reinserted inside the sludge recovering cavity **19** mixes with diluted sludge resulting from the sedimentation of the flocs in the sedimentation zone **16** and the cycle starts over again, gradually increasing the solid constituents concentration of the sludge being progressively purged of water.

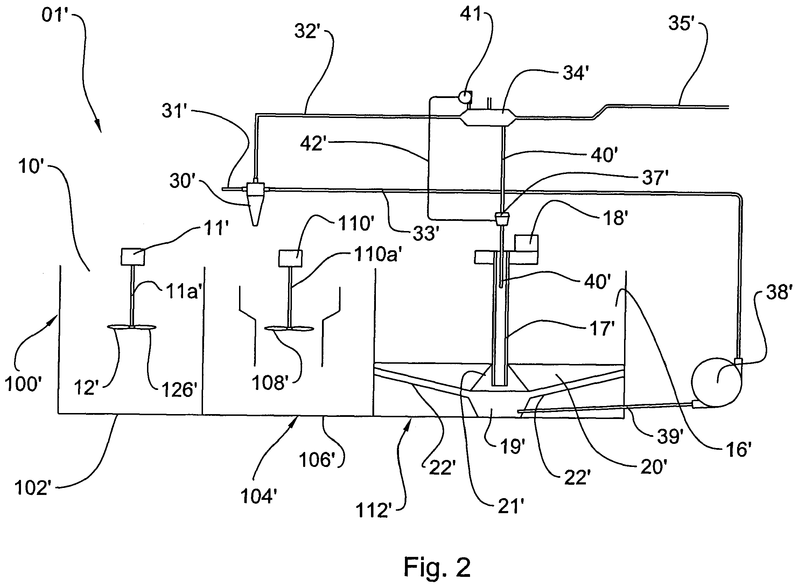

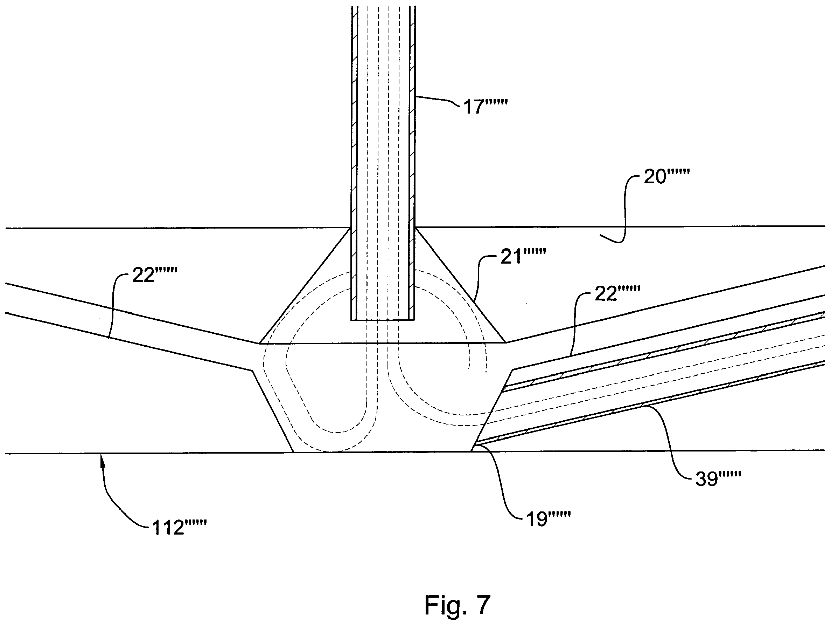

Also, the combination of the scraper **20'''''',** the upwardly pointed embossed cone **21'''''',** the sludge recovering cavity and both the recirculation line **39''''''** and reinsertion in the central tube line **40''''''** creates a particular fluid flow behaviour inside the sludge recovering cavity **19''''''** as seen on **Fig. 7****.** This flowing behaviour guides the sludge from the reinsertion line **40''''''** to the recirculation line **39''''''** while also incorporating to the concentrated sludge coming from the reinsertion line **40''''''** the diluted sludge which accumulates inside sludge recovering cavity **19''''''** due to sedimentation.
Once again, the combination of the scraper **20', 20", 20'''** the inverted cone **21', 21", 21'''** the sludge recovering cavity and both the recirculation line **39', 39", 39'''** and reinsertion line **40', 40", 40'''** located inside the rotating shaft **17', 17", 17'"** on **Figs. 2****,** **3** **and** **4****,** respectively creates a particular fluid flow behaviour inside the sludge recovering cavity **19', 19", 19'''.** This flowing behaviour guides the sludge from the reinsertion line **40', 40", 40'''** to the recirculation line **39', 39", 39'''** while also incorporating to the concentrated sludge coming from the reinsertion line **40', 40", 40'''** the diluted sludge which accumulates inside sludge recovering cavity **19', 19", 19'''** due to sedimentation. In this case, however, the inverted cone **21', 21", 21'''** is much preferred as it prevents concentrated sludge coming from the reinsertion line **40', 40", 40'''** from back flowing.

This particular fluid flow behaviour has been simulated using state of the art computer programs following known principles of fluid mechanics and the result is thus shown on **Fig. 7****.** It shows the concentrated sludge downwardly pouring from the reinsertion line **40"""** into the sludge recovering cavity **19''''''** and either going straight to the recirculation line **39''''''** or being redirected by the inverted cone **21''''''** in order to keep this sludge in the cavity **19''''''** of the sedimentation zone **16''''''.** This fluid flow behaviour thus maximizes recirculation of the concentrated sludge, while mixing it with diluted sludge continually depositing due to gravity, through the recirculation apparatus with the inverted cone **21"""** substantially controlling backflow of the concentrated sludge toward the top part of the sedimentation zone **16'''''',** thus effectively separating the sludge recovering cavity from the top part of the sedimentation zone **16''''''.**

**Figs. 2****,** **3** **and** **4** essentially show the water treatment facility of **Fig. 1** but with embodiment two of the present invention and different means of controlling the flow throughout the recirculation apparatus. In those embodiments, the rotating shaft **17'** of the sedimentation zone **16',** which rotates the scraper **20',** has a hollow center, allowing the outlet end mouth of reinsertion line **40'** from embodiment one to be located inside thereof. This configuration allows for a better integration of the sludge recirculation system of the present invention inside the water treatment facility, necessitating less space to operate.

On **Fig.2****,** a suspended solid analyser **41** is installed on line **42'** connecting the sand sedimentation chamber **34'** and the flow control valve **37',** allowing the selective opening of the latter depending on the concentration of solid constituents of the sludge inside the sand sedimentation chamber **34'.** If this concentration is below a predetermined threshold value, then the suspended solid analyser **41** controls the flow control valve **37'** by sending a signal through a communicating means **42',** which is in this case a cable. The sludge is then reinserted inside the sludge recovering cavity **19'** so it can mix with the diluted sludge that gradually accumulates due to sedimentation. When the concentration exceeds said treshold value, the flow control valve **37'** closes and the highly concentrated sludge can exit the sludge recirculation system through the elimination line **35'.**

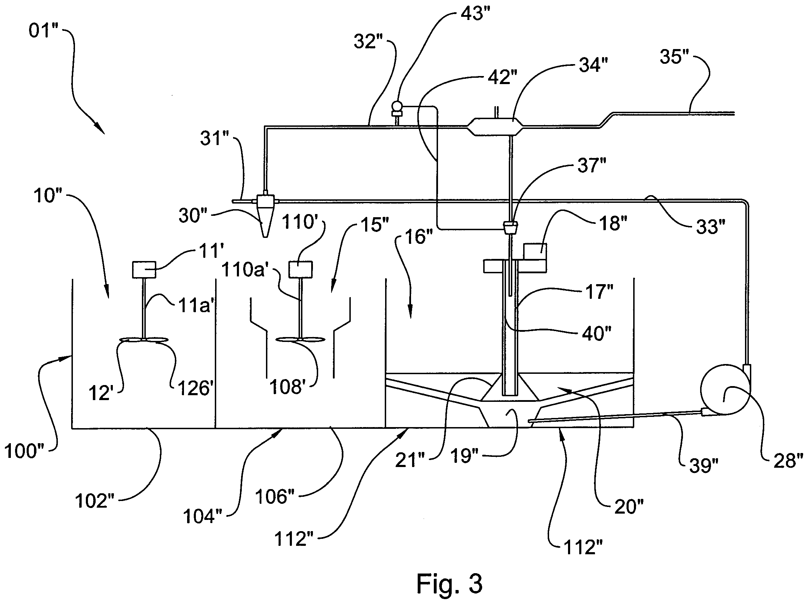

On **Fig.3****,** a flow meter **43** is installed at the same position as the suspended solid analyser **41** of **Fig.2** which it replaces. In this case, the flow meter **43** also dictates to the flow control valve **37"** whether it should be open or closed, depending on the predetermined threshold values of flow rates.

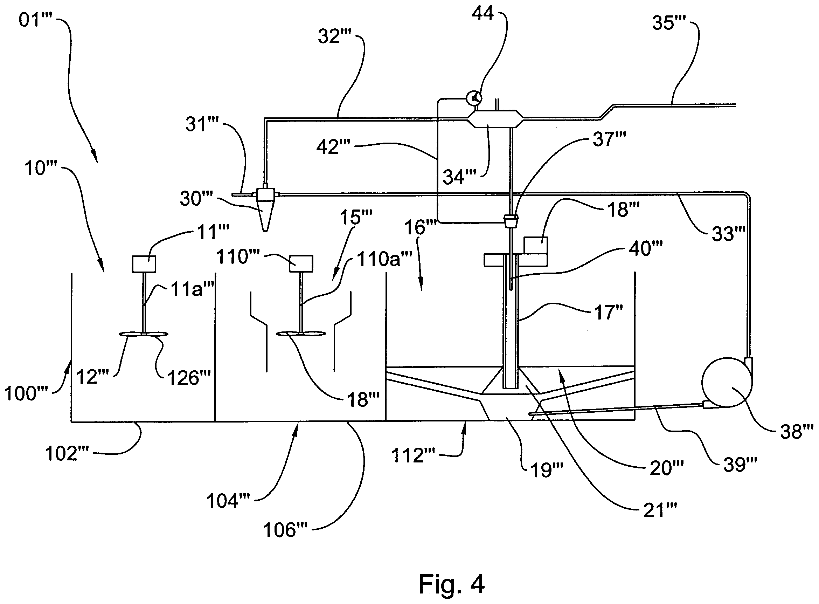

On **Fig. 4** a timer **44** can replace the suspended solid analyser **41** of **Fig.2****.** In this case, the timer **44** is used to punctually operate the flow control valve **37''',** depending on the predetermined time value inputted.

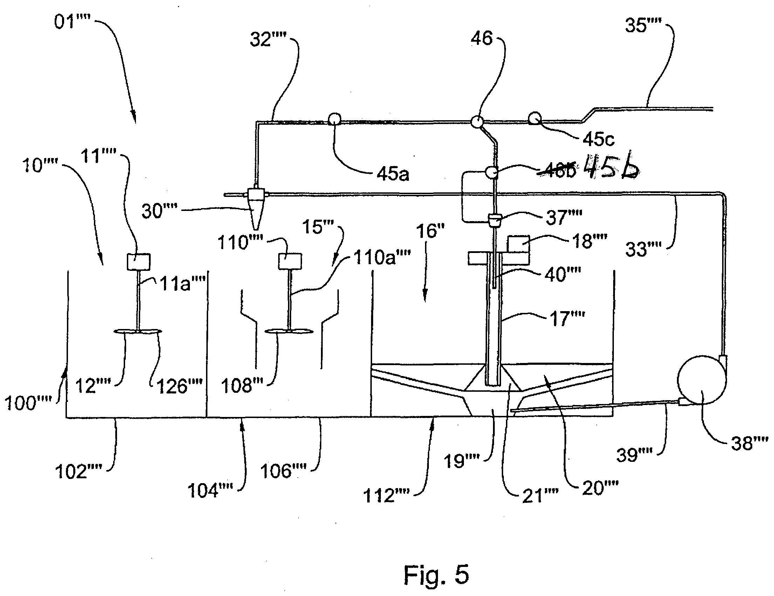

**Fig. 5** shows the preferred positions for the flow control devices of **Figs 2** and **3****,** respectively a suspended solid analyser **41** or a flow meter **43.** In this case, the superfluous sand sedimentation chamber **34""** has been omitted for clarity of the view. The devices are still used to manage the flow control valve **37"",** while the different positions shown each have their particular advantages depending on the intended use of the sludge recirculation system. The flow control device position **45a** is connected to the overflow outlet line **32""** of the hydro cyclone **30""** and located downstream of the junction **46""** between reinsertion line **40""** and elimination line **35"".** At position **45a,** the flow control device effectively changes the configuration of the flow control valve **37''''** before the desired concentration crosses the y-junction **46"".** This position **45a** allows the sludge recirculation system to reinsert only sludge with lower concentrations than the threshold value inside the sludge recovering cavity **19'''',** which in turn allows for a certain time saving.

Actually, if the flow control device is located at position **45b,** only sludge with a concentration equal to or above the threshold value will be eliminated from the system, thus assuring a minimum efficiency. However, sludge with a concentration high enough to be eliminated through the elimination line **35""** will be reinserted inside the sludge recovering cavity **19""** because of its position upstream of the y-junction **46""** thus requiring unneeded recirculation of the sludge and in turn more time to treat it. A combination of the two systems **45a** and **45b** of flow control devices, however, allows for the qualities of both to be used to maximize the efficiency of the system. A flow control device located at position **45c** could further be used in combination with either a flow control device at position **45a** or **45b** or both **45a** and **45b** in order to stop the output of concentrated sludge in the event of a breakdown or failure of the system that could send diluted sludge accidentally toward the elimination line 35"" even though it doesn't meet the concentration requirements of the predetermined threshold value.

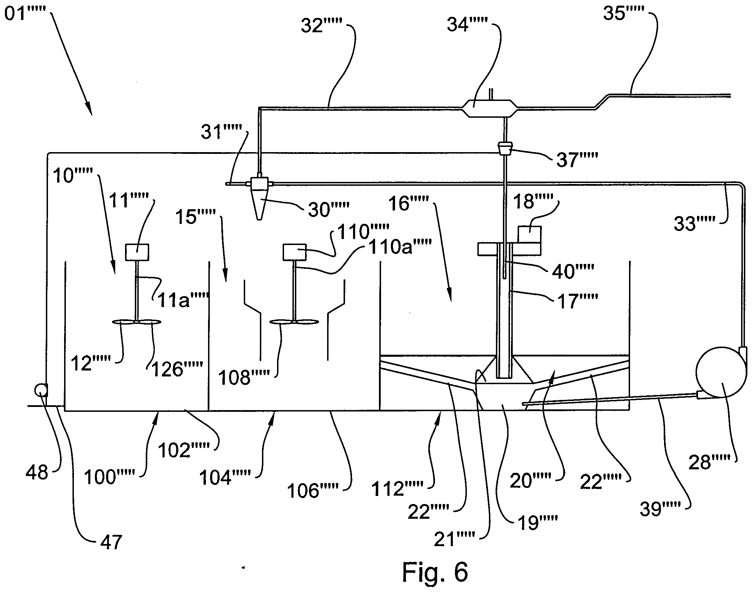

The water treatment facility of **Fig. 6** comprises a suspended solid analyser 48 mounted on the input line **47** which brings water to the coagulation zone **10'''''** which manages the flow control valve **37'''''** of the sludge recirculation system in such a manner that the concentration of the sludge coming out of the sludge recirculation system through the elimination line **40'''''** is concentrated enough based on the water input concentration. This system can be used in combination with those of the preceding figures in order to further optimize the efficiency of treatment of the extracted sludge.

## Claims

1. A sludge recirculation system to be added to a sedimentation zone (16, 16') of a water treatment facility using at least one purification method selected from the group consisting of flocculation, sedimentation, coagulation and ballast flocculation, said sludge recirculation system for repeated cycling of said sludge in a progressively water purging fashion, said system comprising:
- a downstream sludge recovering vessel (112, 112'), including a sludge recovering cavity (19, 19') located at a bottom portion of said vessel, said cavity defining a certain volume of said sedimentation zone for accumulating a diluted sludge under the influence of gravity;
- a recirculation apparatus, comprising:
i. liquid and solid separation means (30, 30') that allows the purification of a liquid solution by removing solid contaminants located therein, for obtaining a resulting sludge, of which higher density particles have been removed;
ii. recirculation means, comprising:
1. a recirculation line (39, 39') connected at an intake end thereof to said sludge recovering cavity (19, 19') and connected to said liquid and solid separation means (30, 30') at an outlet end thereof, for recirculating the resulting sludge;
2. a reinsertion line (40, 40') operatively connected at an intake end thereof to said liquid and solid separation means (30, 30') and to said sludge recovering vessel (112, 112') at an outlet end thereof; and
3. an elimination line (35, 35') connected at an intake end thereof to said reinsertion line (40, 40') for rejecting high density sludge outside of said water treatment facility at a downstream outlet end thereof;
iii. means active during said repeated cycling of said sludge through the sludge recirculation system for progressively eliminating said sludge from said sludge recirculation system through said elimination line; and
iv. means to drive said sludge into said recirculation apparatus during said repeated cycling;
wherein said means to drive said sludge into said recirculation apparatus is a pump (38, 38') located downstream on said recirculation line (39, 39');
wherein said liquid and solid separation means is a hydro cyclone (30, 30') mounted downstream of said recirculation line relative to said pump, which comprises an overflow outlet and an underflow outlet, said overflow outlet connected to said recirculation means and said underflow outlet pouring inside a flocculation zone;
wherein a control means being a flow control means is further provided to regulate the flow of said liquid solution flowing through said recirculation apparatus in such a fashion as to optimize the efficiency of said hydro cyclone;
wherein said means for progressively eliminating said sludge from said sludge recirculation system through said elimination line is a suspended solid analyser (36, 41) which works in conjunction with said flow control means to further optimize the efficiency of said hydro cyclone by adjusting the flow speed to said solid constituents concentration of said sludge;wherein said sedimentation zone (16, 16') comprises a rotating scraper (20, 20') comprising a top part and a bottom part relative to the plane of said sedimentation zone and rotating in said plane, which guides said sludge deposited at said bottom of said sedimentation zone toward said sludge recovery cavity (19, 19') in such a fashion as to keep it grounded and effectively separates said sedimentation zone in a first upper section and a second lower section relative to the plane of the scraper, thus isolating said sludge recovery cavity (90, 90') said recirculation line (39, 39') intake end and said reinsertion line (40, 40') outlet end located within said second lower part from said first upper part of said sedimentation zone.

2. A sludge recirculation system as in claim 1, wherein said rotating scraper is hollow-centered forming a hollow shaft and coincides with a downstream end portion of said reinsertion line of said recirculation apparatus pouring inside said sludge recovering cavity.

3. A sludge recirculation system as in claim 2, wherein an inverted cone is embossed on said bottom part of said scraper coaxially to said hollow shaft, substantially preventing said liquid solution located in said sludge recovering cavity from dynamically back flowing into said reinsertion line and maximising flow through said recirculation line.

4. A sludge recirculation system as in claim 1, wherein said recirculation apparatus extends externally to said sludge recovering vessel.

5. A sludge recirculation system as in claim 1, wherein said reinsertion line outlet of said recirculation apparatus opens inside of said sludge recovering cavity.

6. A sludge recirculation system as in claim 2, wherein a sand sedimentation chamber is further included in said recirculation apparatus and mounted upstream of said reinsertion line and of said elimination line and downstream of said hydro cyclone, enabling sand-like granular material recuperation within said recirculation apparatus where the sludge contains sand-like material.

7. A sludge recirculation system as in claim 2, wherein said recirculation apparatus comprises a recirculation flow control valve (37, 37') mounted to said reinsertion line and a suspended solid analyser also mounted to said reinsertion line, controlling the opening and closing of said flow control valve depending on concentration of said sludge inside said recirculation apparatus.

8. A sludge recirculation system as in claim 1, wherein a suspended solid analyser is installed at an entry pipe feeding said water treatment facility with water, thus allowing the water flow through said recirculation apparatus to be controlled depending on the colloidal contaminants concentration inside the water.

9. A sludge recirculation system as in claim 7, wherein said hydro cyclone rejects recirculated sludge in the sludge recirculation system.

10. A sludge recirculation system as in claim 1, wherein said means for progressively eliminating said sludge from said sludge recirculation system includes means to monitor the solid constituents concentration of said sludge.

11. A method of creating a particular fluid flow behaviour making use of a sludge recirculation system as described in claim 1, preventing the sludge located in said second lower section of said sedimentation zone of coming back in said first upper section of the sedimentation zone as well as maximizing the flow from said reinsertion line to said recirculation line, comprising the following steps :
a) a mixture of water and contaminants flocs enters the sedimentation zone;
b) the flocs then drop to a downstream sludge recovering vessel, including a sludge recovering cavity, located at a bottom portion of said vessel, said cavity defining a certain volume of said sedimentation zone under the influence of gravity, forming sludge;
c) a rotating scraper, comprising a bottom end and a hollow center, guides said sludge deposited at said bottom of said vessel toward said sludge recovery cavity in such a fashion as to keep it grounded;
d) a recirculation line having an intake mouth thereof located inside said sludge recovering cavity and operatively connected to a pump, drives sludge into said recirculation apparatus;
e) a certain amount of sludge is reinserted within said sludge recovering cavity through a reinsertion line having an outlet end thereof located inside said hollow- center of said scraper;
f) the resulting stream of sludge flows back toward said recirculation line without back flowing inside the reinsertion line due to the specific combination of:
i. said rotating scraper;
ii. said sludge recovering cavity; iii. said recirculation apparatus;
iv. said recirculation line; and
v. said reinsertion line of said recirculation apparatus located inside said hollow center of said rotating scraper and pouring into said sludge recovering cavity.

12. A method of creating a particular fluid flow behaviour as in claim 11, wherein an inverted cone is added to said bottom end of said scraper, further enabling the flow of said sludge pouring from said reinsertion line through said recirculation line without backflowing inside said reinsertion line.

## Patentansprüche

1. Schlammrückführungssystem zum Hinzufügen zu einer Sedimentationszone (16, 16') einer Wasseraufbereitungsanlage unter Verwendung mindestens eines Reinigungsverfahrens, ausgewählt aus der Gruppe bestehend aus Flockung, Sedimentation, Koagulation und Ballastflockung, wobei das Schlammrückführungssystem zum wiederholten Zyklisieren des Schlamms in einer progressiven Wasserspülweise vorgesehen ist, wobei das System umfasst:
- einen nachgelagerten Schlammrückgewinnungsbehälter (112, 112'), der eine Schlammrückgewinnungskavität (19, 19') beinhaltet, die an einem unteren Teil des Behälters angeordnet ist, wobei die Kavität ein bestimmtes Volumen der Sedimentationszone definiert zum Akkumulieren eines verdünnten Schlamms unter Einfluss der Gravitation;
- eine Rückführungsvorrichtung, umfassend:
i. flüssig und fest Separationsmittel (30, 30'), die das Reinigen der flüssigen Lösung durch Entfernen der festen Kontaminationsstoffe, die darin angeordnet sind, erlauben zum Erhalten eines resultierenden Schlamms, aus dem Partikel mit höherer Dichte entfernt wurden;
ii. Rückführungsmittel, umfassend:
1. eine Rückführungsleitung (39, 39'), die an einem ihrer Einlassenden mit der Schlammrückgewinnungskavität (19, 19') verbunden ist und die mit den flüssigen und festen Separationsmitteln (30, 30') an einem ihrer Auslassenden verbunden ist zum Rückführen des resultierenden Schlamms;
2. eine Wiedereinsetzleitung (40, 40'), die an einem ihrer Einlassenden mit den flüssigen und festen Separationsmitteln (30, 30') und mit dem Schlammrückgewinnungsbehälter (112, 112') an einem ihrer Auslassenden funktionsfähig verbunden ist; und
3. eine Eliminierungsleitung (35, 35'), die an einem ihrer Einlassenden mit der Wiedereinsetzleitung (40, 40') verbunden ist zum Aussondern von Schlamm mit hoher Dichte aus der Wasseraufbereitungsanlage an einem ihrer nachgelagerten Auslassenden;
iii. Mittel, die während des wiederholten Zyklisierens des Schlamms durch das Schlammrückführungssystem zum progressiven Eliminieren des Schlamms aus dem Schlammrückführungssystem durch die Eliminierungsleitung aktiv sind; und
iv. Mittel zum Einfahren des Schlamms in die Rückführungsvorrichtung während des wiederholten Zyklisierens;
wobei die Mittel zum Einfahren des Schlamms in die Rückführungsvorrichtung eine Pumpe (38, 38') sind, die nachgelagert an die Rückführungsleitung (39, 39') angeordnet ist;
wobei die flüssigen und festen Separationsmittel ein Hydrozyklon (30, 30') sind, der nachgelagert an die Rückführungsleitung relativ zu der Pumpe montiert ist, die einen Überlaufauslass und einen Unterlaufauslass umfasst, wobei der Überlaufauslass mit den Rückführungsmitteln verbunden ist und der Unterlaufauslass in eine Flockungszone gießt;
wobei ein Steuerungsmittel ein Durchflusssteuerungsmittel ist, das ferner bereitgestellt ist zum Regulieren des Durchflusses der flüssigen Lösung, die durch die Rückführungsvorrichtung in einer solchen Weise fließt, dass die Effizienz des Hydrozyklons optimiert wird;
wobei die Mittel zum progressiven Eliminieren des Schlamms aus dem Schlammrückführungssystem durch die Eliminierungsleitung ein Schwebstoffanalysator (36, 41) sind, der in Verbindung mit den Durchflusssteuerungsmitteln arbeitet zum weiteren Optimieren der Effizienz des Hydrozyklons durch Anpassen der Fließgeschwindigkeit an die Feststoffkonzentration des Schlamms; wobei die Sedimentationszone (16, 16') einen rotierenden Schaber (20, 20') umfasst, der einen oberen Teil und einen unteren Teil umfasst, relativ zu der Ebene der Sedimentationszone, und der in der Ebene rotiert, der den Schlamm, der an dem Boden der Sedimentationszone abgelagert ist, in Richtung der Schlammrückgewinnungskavität (19, 19') leitet, in einer solchen Weise, dass er am Boden bleibt und effektiv die Sedimentationszone in einen ersten oberen Abschnitt und einen zweiten unteren Abschnitt relativ zu der Ebene des Schabers separiert, wodurch die Schlammrückgewinnungskavität (90, 90'), das Einlassende der Rückführungsleitung (39, 39'), und das Auslassende der Wiedereinsetzleitung (40, 40'), das sich innerhalb des zweiten unteren Teils vom ersten oberen Teil der Sedimentationszone aus befindet.

2. Schlammrückführungssystem nach Anspruch 1,
wobei der rotierende Schaber hohl-zentriert ist und eine Hohlwelle bildet und mit einem nachgelagerten Endabschnitt der Wiedereinsetzleitung der Rückführungsvorrichtung zusammentrifft, der in die Schlammrückgewinnungskavität gießt.

3. Schlammrückführungssystem nach Anspruch 2,
wobei sich ein umgekehrter Kegel auf dem unteren Teil des Schabers koaxial zu der Hohlwelle erhebt, der im Wesentlichen die flüssige Lösung, die in der Schlammrückgewinnungskavität angeordnet ist, an dem dynamischen Rückfluss in die Wiedereinsetzleitung hindert und den Durchfluss durch die Rückführungsleitung maximiert.

4. Schlammrückführungssystem nach Anspruch 1,
wobei sich die Rückführungsvorrichtung außerhalb des Schlammrückgewinnungsbehälters erstreckt.

5. Schlammrückführungssystem nach Anspruch 1,
wobei der Auslass der Wiedereinsetzleitung von der Rückführungsvorrichtung in der Schlammrückgewinnungskavität öffnet.

6. Schlammrückführungssystem nach Anspruch 2,
wobei eine Sandsedimentationskammer in der Rückführungsvorrichtung ferner enthalten ist und vorgelagert an die Wiedereinsetzleitungund die Eliminierungsleitung und nachgelagert an den Hydrozyklon montiert ist, die sandähnliche Granulatrückgewinnung innerhalb der Rückführungsvorrichtung ermöglicht, wo der Schlamm sandähnliches Material enthält.

7. Schlammrückführungssystem nach Anspruch 2,
wobei die Rückführungsvorrichtung ein Rückführungsdurchflusssteuerungsventil (37, 37') umfasst, das an die Wiedereinsetzleitungmontiert ist und einen Feststoffanalysator, der auch an die Wiedereinsetzleitung montiert ist, der das Öffnen und das Schließen des Durchflusssteuerungsventils in Abhängigkeit von der Konzentration des Schlamms innerhalb der Rückführungsvorrichtung steuert.

8. Schlammrückführungssystem nach Anspruch 1,
wobei ein Schwebstoffanalysator an einer Einlassleitung installiert ist, der die Wasseraufbereitungsanlage mit Wasser versorgt, wodurch der Wasserdurchfluss durch die Rückführungsvorrichtung ermöglicht wird, welcher in Abhängigkeit der Konzentration von kolloidalen Verunreinigungen im Wasser gesteuert wird.

9. Schlammrückführungssystem nach Anspruch 7,
wobei der Hydrozyklon rückgeführten Schlamm in das Schlammrückführungssystem aussondert.

10. Schlammrückführungssystem nach Anspruch 1,
wobei die Mittel zum progressiven Eliminieren des Schlamms aus dem Schlammrückführungssystem Mittel zum Überwachen der Konzentration der festen Kontaminationsstoffe des Schlamms beinhaltet.

11. Verfahren zum Erzeugen eines bestimmten Fluidströmungsverhaltens unter Verwendung eines Schlammrückführungssystems nach Anspruch 1, das den Schlamm, der in dem zweiten unteren Abschnitt der Sedimentationszone angeordnet ist an dem Zurücckommen in den ersten oberen Abschnitt der Sedimentationszone hindert sowie den Durchfluss von der Wiedereinsetzleitung zu der Rückführungsleitung maximiert, umfassend die folgenden Schritte:
a) ein Gemisch aus Wasser und verunreinigten Flocken tritt in die Sedimentationszone ein;
b) die Flocken tropfen danach zu einem nachgelagerten Schlammrückgewinnungsbehälter, der eine Schlammrückgewinnungskavität beinhaltet, die an einem unteren Teil des Behälters angeordnet ist, wobei die Kavität ein bestimmtes Volumen der Sedimentationszone unter Einfluss der Gravität definiert, und bilden einen Schlamm;
c) ein rotierender Schaber, der ein unteres Ende und eine Hohl-Zentrierung umfasst, leitet den Schlamm, der an dem Boden des Behälters ablagert ist, in Richtung der Schlammrückgewinnungskavität in einer solchen Weise, dass er am Boden bleibt;
d) eine Rückführungsleitung, die eine Einlassmündung aufweist, die innerhalb der Schlammrückgewinnungskavität angeordnet ist und funktionsfähig verbunden zu einer Pumpe ist, fährt den Schlamm in die Rückgewinnungsvorrichtung ein;
e) eine bestimmte Menge des Schlamms wird wieder innerhalb der Schlammrückgewinnungskavität durch die Wiedereinsetzleitung, die ein Auslassende aufweist, das innerhalb der Hohl-Zentrierung des Schabers oder an der Wand der Schlammrückgewinnungskavität angeordnet ist, eingefügt;
f) der resultierende Strom des Schlamms fließt zurück in Richtung der Rückführungsleitung ohne in die Wiedereinsetzleitungzurückzufließen aufgrund der spezifischen Kombination aus:
i. dem rotierenden Schaber;
ii. der Schlammrückführungskavität;
iii. der Rückführungsvorrichtung;
iv. der Rückführungsleitung; und
v. der Wiedereinsetzleitungder Rückführungsvorrichtung, die in der Hohl-Zentrierung des rotierenden Schabers oder an der Wand der Schlammrückgewinnungskavität angeordnet ist und in die Schlammrückgewinnungskavität gießt.

12. Verfahren zum Erzeugen eines bestimmten Fluidströmungsverhaltens nach Anspruch 11,
wobei ein umgekehrter Kegel zu dem unteren Ende des Schabers hinzugefügt wird, der ferner den Fluss des Schlamms ermöglicht, der von der Wiedereinsetzleitung durch die Rückführungsleitung gießt, ohne in die Wiedereinsetzleitung zurückzufließen.

## Revendications

1. Un système de recirculation des boues à ajouter à une zone de sédimentation (16, 16') d'une installation de traitement des eaux en utilisant au moins un procédé de purification choisi dans le groupe comprenant la floculation, la sédimentation, la coagulation et la floculation par ballast, ledit système de recirculation des boues permettant un cycle répété desdites boues dans un mode progressif de purge d'eau, ledit système comprenant:
une cuve de récupération de boues en aval (112, 112'), comprenant une cavité de récupération de boues (19, 19') située dans une partie inférieure de ladite cuve, ladite cavité définissant un certain volume de ladite zone de sédimentation dans laquelle les boues diluées peuvent s'y accumuler sous l'effet de la gravité;
un appareil de recirculation comprenant:
i. des moyens de séparation liquide et solide (30, 30') permettant l'épuration d'une solution liquide en éliminant les contaminants solides qui s'y trouvent pour obtenir une boue résultante, dont des particules à haute densité y ont été retirées;
ii. un moyen de recirculation comprenant:
1. une conduite de recirculation (39, 39') connectée à l'une de ses extrémités d'admission à ladite cavité de récupération des boues (19, 19') et connectée auxdits moyens de séparation de liquide et de solide (30, 30') à une extrémité de sortie de celle-ci pour recirculer les boues en résultant;
2. une conduite de réinsertion (40, 40') connectée de manière opérationnelle par une extrémité d'admission de celle-ci auxdits moyens de séparation liquide et solide (30, 30') et audit récipient de récupération de boues (112, 112') par une extrémité de sortie de celle-ci; et
3. une conduite d'élimination (35, 35') connectée à une extrémité d'admission de celle-ci à ladite conduite de réinsertion (40, 40') et rejetant les boues à haute densité à l'extérieur de ladite installation de traitement d'eau à une extrémité de sortie aval de celle-ci;
iii. des moyens actifs pendant ledit cycle répété desdites boues à travers le système de recirculation de boues pour éliminer progressivement lesdites boues dudit système de recirculation de boues à travers ladite conduite d'élimination; et
iv. des moyens pour entraîner lesdites boues dans ledit appareil de recirculation pendant ledit cycle répété;
**caractérisé en ce que** lesdits moyens pour entraîner lesdites boues dans ledit appareil de recirculation sont une pompe (38, 38') située en aval sur ladite conduite de recirculation (39, 39');
**caractérisé en ce que** lesdits moyens de séparation liquide-solide sont un hydro cyclone (30, 30') monté en aval de ladite conduite de recirculation par rapport à ladite pompe, qui comprend une sortie de trop-plein et une sortie de fond, ladite sortie de trop-plein étant connectée audit moyen de recirculation et ledit orifice de sortie de fond se déversant à l'intérieur d'une zone de floculation;
**caractérisé en ce qu'**un moyen de commande constitué par un moyen de régulation de débit est en outre prévu pour réguler l'écoulement de ladite solution liquide circulant dans ledit appareil de recirculation de manière à optimiser l'efficacité dudit hydro cyclone;
**caractérisé en ce que** lesdits moyens pour éliminer progressivement lesdites boues dudit système de recirculation de boues à travers ladite conduite d'élimination sont un analyseur de solides en suspension (36, 41) qui fonctionne conjointement avec ledit moyen de régulation de débit pour optimiser davantage l'efficacité dudit hydro cyclone en ajustant la vitesse d'écoulement jusqu'à la concentration en constituants solides de ladite boue; et **caractérisé en ce que** ladite zone de sédimentation (16, 16') comprend un racleur rotatif (20, 20'), comprenant une partie supérieure et une partie inférieure par rapport au plan de ladite zone de sédimentation et tournant dans ledit plan, qui guide lesdites boues déposées au fond de ladite zone de sédimentation vers ladite cavité de récupération des boues (19, 19') de manière à la maintenir à terre et à séparer efficacement ladite zone de sédimentation dans une première section supérieure et une seconde section inférieure par rapport au plan du racleur, isolant ainsi ladite cavité (90, 90') de récupération de boues, ladite extrémité d'admission de conduite de recirculation (39, 39') et ladite extrémité de sortie de la conduite de réinsertion (40, 40') situées dans ladite seconde partie inférieure de ladite première partie supérieure de ladite zone de sédimentation.

2. Système de recirculation de boues selon la revendication 1,
dans lequel ledit racleur rotatif est creux en son centre, formant un arbre creux et coïncide avec une partie d'extrémité aval de ladite conduite de réinsertion dudit appareil de recirculation se déversant à l'intérieur de ladite cavité de récupération de boues.

3. Système de recirculation de boues selon la revendication 2,
dans lequel un cône inversé est gaufré sur ladite partie inférieure dudit racleur coaxialement audit arbre creux, empêchant ladite solution liquide située dans ladite cavité de récupération de boues de plus ou moins retourner de manière dynamique dans ladite conduite de réinsertion et maximisant l'écoulement à travers ladite conduite de recirculation.

4. Système de recirculation de boues selon la revendication 1,
dans lequel ledit appareil de recirculation fait saillie à l'extérieur dudit récipient de récupération de boues.

5. Système de recirculation de boues selon la revendication 1,
dans lequel ladite sortie de conduite de réinsertion dudit appareil de recirculation s'ouvre à l'intérieur de ladite cavité de récupération de boues.

6. Système de recirculation de boues selon la revendication 2,
dans lequel une chambre de sédimentation de sable est en outre incluse dans ledit appareil de recirculation et montée en amont de ladite conduite de réinsertion et de ladite conduite d'élimination et en aval dudit hydro cyclone, permettant une récupération de matériau granulaire analogue à du sable dans ledit appareil de recirculation où la boue contient un matériau semblable au sable.

7. Système de recirculation de boues selon la revendication 2,
dans lequel ledit appareil de recirculation comprend une vanne de régulation de débit de recirculation (37, 37') montée sur ladite conduite de réinsertion et un analyseur de solides en suspension monté également sur ladite conduite de réinsertion, commandant l'ouverture et la fermeture de ladite vanne de régulation de débit en fonction de la concentration desdites boues à l'intérieur dudit appareil de recirculation.

8. Système de recirculation de boues selon la revendication 1,
dans lequel un analyseur de solides en suspension est installé au niveau d'un tuyau d'entrée alimentant en eau ladite installation de traitement d'eau, permettant ainsi de contrôler le débit d'eau à travers ledit appareil de recirculation en fonction de la concentration en contaminants colloïdaux dans l'eau.

9. Système de recirculation de boues selon la revendication 7,
dans lequel ledit hydro cyclone rejette les boues recirculées dans le système de recirculation de boues.

10. Système de recirculation de boues selon la revendication 1,
**caractérisé en ce que** lesdits moyens pour éliminer progressivement lesdites boues du système de recirculation des boues comprend des moyens pour surveiller la concentration de constituants solides desdites boues.

11. Procédé de création d'un comportement d'écoulement de fluide particulier faisant intervenir un système de recirculation de boues tel que décrit dans la revendication 1, empêchant les boues situées dans ladite seconde section inférieure de ladite zone de sédimentation de revenir dans ladite première section supérieure de la zone de sédimentation, ainsi que maximisant l'écoulement depuis ladite conduite de réinsertion vers ladite conduite de recirculation, comprenant les étapes suivantes:
a) un mélange d'eau et de flocs de contamination pénètre dans une zone de sédimentation;
b) les flocs tombent ensuite dans une cuve de récupération des boues en aval, comprenant une cavité de récupération des boues, située au niveau d'une partie inférieure de ladite cuve, ladite cavité définissant un certain volume de ladite zone de sédimentation sous l'influence de la gravité, formant des boues;
c) un racleur rotatif, comprenant une extrémité inférieure et un centre creux, guide lesdites boues déposées au fond dudit récipient vers ladite cavité de récupération des boues de manière à le maintenir à la terre;
d) une conduite de recirculation ayant son embouchure d'admission située à l'intérieur de ladite cavité de récupération des boues et connectée de manière opérationnelle à une pompe, entraîne les boues dans ledit appareil de recirculation;
e) une certaine quantité de boues est réinsérée à l'intérieur de ladite cavité de récupération de boues par l'intermédiaire d'une conduite de réinsertion ayant une extrémité de sortie située à l'intérieur du centre creux dudit racleur ou sur la paroi de ladite cavité de récupération de boues;
f) le flux de boues résultant retourne vers ladite conduite de recirculation sans refluer à l'intérieur de la conduite de réinsertion en raison de la combinaison spécifique de:
i. ledit racleur rotatif;
ii. ladite cavité de récupération des boues;
iii. ledit appareil de recirculation;
iv. iv. ladite conduite de recirculation; et
v. ladite conduite de réinsertion dudit appareil de recirculation située dans ledit centre creux dudit racleur rotatif ou sur la paroi de ladite cavité de récupération de boues, et se déversant dans ladite cavité de récupération de boues.

12. Procédé de création d'un comportement d'écoulement de fluide particulier selon la revendication 11,
dans lequel un cône inversé est ajouté à ladite extrémité inférieure dudit racleur, permettant en outre l'écoulement desdites boues s'écoulant de ladite conduite de réinsertion à travers ladite conduite de recirculation sans refluer à l'intérieur de ladite conduite de réinsertion.
